# EUROPEAN PATENT APPLICATION

(11) **EP 1 298 945 A1**
(43) Date of publication of application: **02.04.2003**
(21) Application number: 01308373.8
(22) Date of filing: 01.10.2001
(51) Int. Cl.: H04Q 7/22, H04Q 7/32, H04L 12/56

(54) **A method of controlling the delivery of data and telecommunication system session management**

(71) Applicant: BRITISH TELECOMMUNICATIONS public limited company, London EC1A 7AJ (GB)
(72) Inventor: Minnis, Stephen, Wrenningham NR16 1AF (GB); Johnston, William, Ipswich, Suffolk IP3 8ST (GB)
(74) Representative: Lidbetter, Timothy Guy Edwin

(57) **Abstract**

An internet session involving the delivery of data from a network to a communications terminal (1) over a communications connection (60) is controllable, either by the user or automatically in response to changing network conditions, such that data delivery may be suspended, and the data is stored for later transmission. This can be used to reduce on-line time, by suspending download when available data rates are low, or allows the user to suspend download if he requires the terminal for some other purpose, without abandoning the session and losing the data already downloaded. The system and method is particularly useful in a mobile telecommunications network such as GSM, GPRS (General Packet Radio Service), or UMTS.

## Description

This invention relates to the management of internet or other data access sessions on limited bandwidth devices.

The introduction of new mobile networks such as GPRS and UMTS will introduce new capabilities to the networks including higher data rates available to the user. As these mobile networks are rolled-out, a situation will be created where a number of different types of network will co-exist (e.g. GSM, GPRS, UMTS) each with different capabilities. Mobile devices are under development which will be able to operate across more than one of these networks and may indeed maintain a call (as the user roams) from one network type to another by standard handover mechanisms within the network.

With the development and introduction of new mobile networks it is therefore likely that the data rate available to the user may vary quite substantially during a single call, whether circuit switched or packet switched. Consequently, the service to the user may vary, causing significant variation in the quality and speed of file download and streaming multimedia files. This can be caused by the use of different coding schemes and/or air interface bearer structures in different cells (e.g. moving from a Frequency Division Duplex (FDD) system to a Time Division Duplex (TDD) system). Each coding scheme and bearer service has a theoretical maximum throughput. In fact, even within the same type of network the data rate may vary substantially simply by moving from one cell to another, or even within a cell. The highest data rates will generally only be available in close proximity to a base station, as a result of higher quality signal reception (Signal to Interference Ratio).

The move to a system offering a different data rate is controlled by co-operation between the network and the mobile device, and a data call may continue as normal as the change takes place, without intervention by the user. This allows the optimum data rate to be offered for each cell that the device interacts with, according to the capacity available to the mobile device at its current location.

There is therefore the possibility that a mobile customer will initiate a file transfer/download whilst in an area of good radio coverage that provides a relatively high data rate, but as the customer moves within the network the available data rate may decrease, resulting in the duration of the file download process being unacceptably long, either because of additional costs incurred to the customer as a result of the extended on-line time, or because of the length of time the handset is not available for other uses. Indeed, if the customer moves to a network of a type with lower capability it may not be possible to continue the file download at all, for example becauase of limited buffer capacity. Similarly, if a handset moves to a location in which packet switched operation is not available, completion of the file downlaod may also be impossible. If the file download is partially complete the customer could potentially lose the file information already downloaded.

The present invention provides a solution to this problem.

According to a first aspect of the present invention there is provided a method of controlling the delivery of data from a network to a communications terminal over a communications connection such that data delivery may be suspended, the data being stored for later transmission. If the connection has variable data transport capabilities, the method may comprise the steps of monitoring a property of the connection indicative of its data transport capabilities, and controlling the delivery of data to the communications terminal according to the monitored property. The delivery process may be controlled by a network element responsive to a measured value of the data transport capability. Alternatively, it may be controlled by a signal transmitted from the terminal to the network, either activated by a human user, (for example if he wishes to suspend the delivery process in order to use the terminal for another purpose), or automatically by a means responsive to a measured value of the data transport capability.

According to another aspect, the invention provides a telecommunication system comprising means for the delivery of data from the network to a communications terminal over a communications connection, means for suspending such data delivery, and means for storing data during such suspension for later transmission. The system may comprise means for monitoring a property of the connection indicative of its data transport capabilities, and means for controlling the delivery of data to the communications terminal according to the said property. Alternatively, means may be provided for receiving a signal transmitted from the terminal to the network, and means for controlling the delivery of data to the communications terminal in reponse to the said signal.

In preferred embodiments the monitored property used to control the deklivery process is the data transport rate available for transmission of the data.

This invention therefore provides a "Pause" feature to allow the file transfer/download to be suspended until the customer device is better able to receive the rest of the file. This feature may be automatically invoked, either by the network or the customer device, depending on a pre-determined set of parameters. Alyternatively it may be initiated manually by the user.

The device may be operable to select from any two or more of the following options in response to a fall in data rate or a problem at handover:
- continue download process with the current session performance
- transfer the current data interaction session to a temporary location in the network where application data is stored for later retrieval, either on cpommand from the customer or automatically when the network capability is restored. The file fragments already downloaded are stored on the mobile device. The remaining data can then be retrieved by the mobile device from the buffer, rather than from the original source when the data rate improves.
- terminate the session

Embodiments of the invention will now be described, by way of example, with reference to the Figures, in which
Figure 1 illustrates a mobile handset equipped with a first data rate indication device which may be used in the invention;.
Figure 2 illustrates a mobile handset and co-operating network equipped with a second data rate indication device which may be used in the invention;.
Figure 3 illustrates a mobile handset and co-operating network equipped with a third data rate indication device which may be used in the invention.
Figure 4 is a schematic diagram illustrating the network elements which co-operate to perform the invention;
Figure 5 is a flow diagram illustrating the operation of the invention.

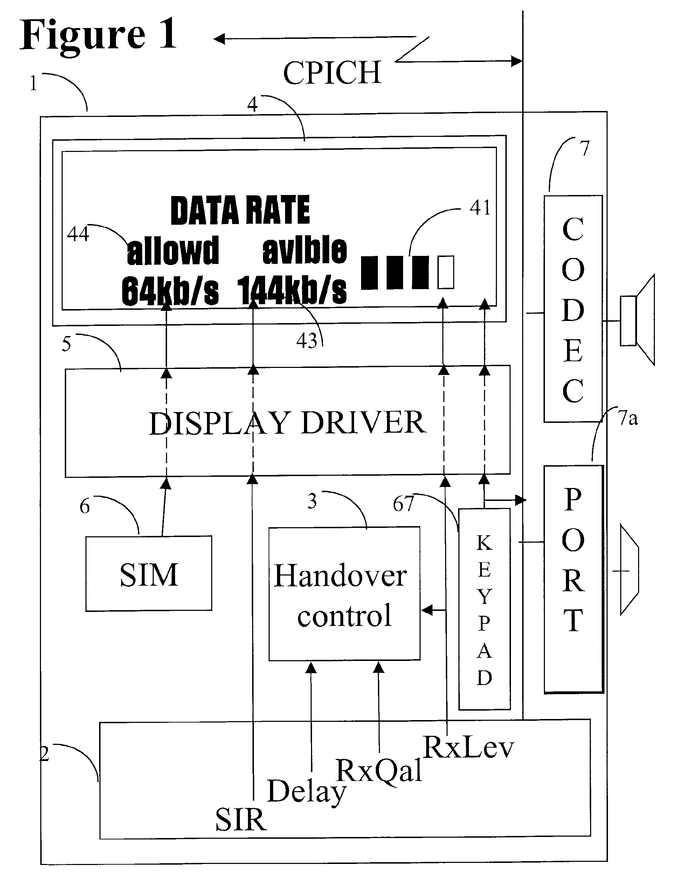

All three embodiments of the data rate indicator shown in Figures 1 2 and 3 are based on the UMTS CDMA (code division multiple access) system, although this is purely illustrative and the invention may be used with frequency division and time division multiplex (FDMA and TDMA) systems as well.

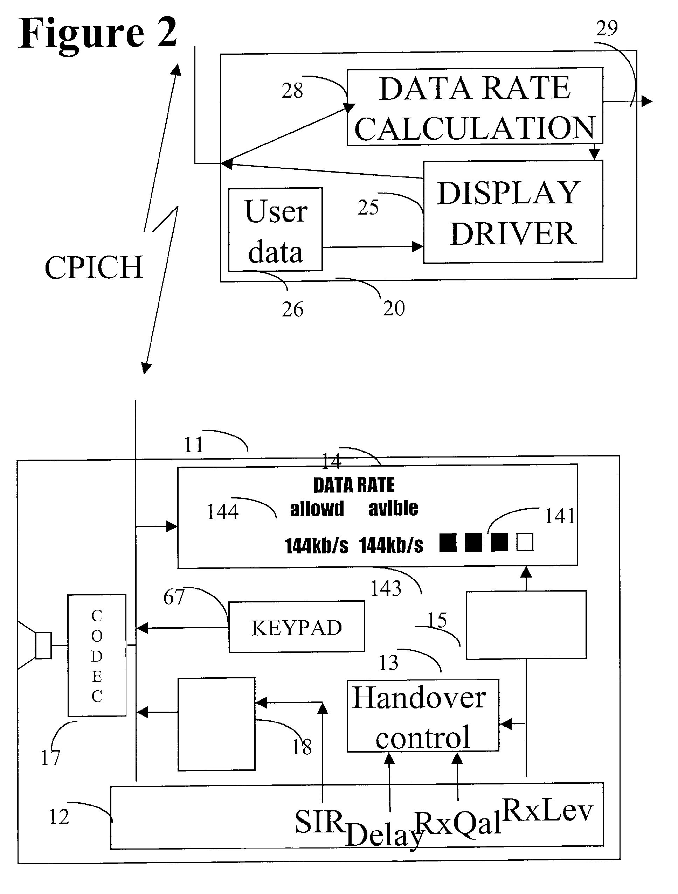

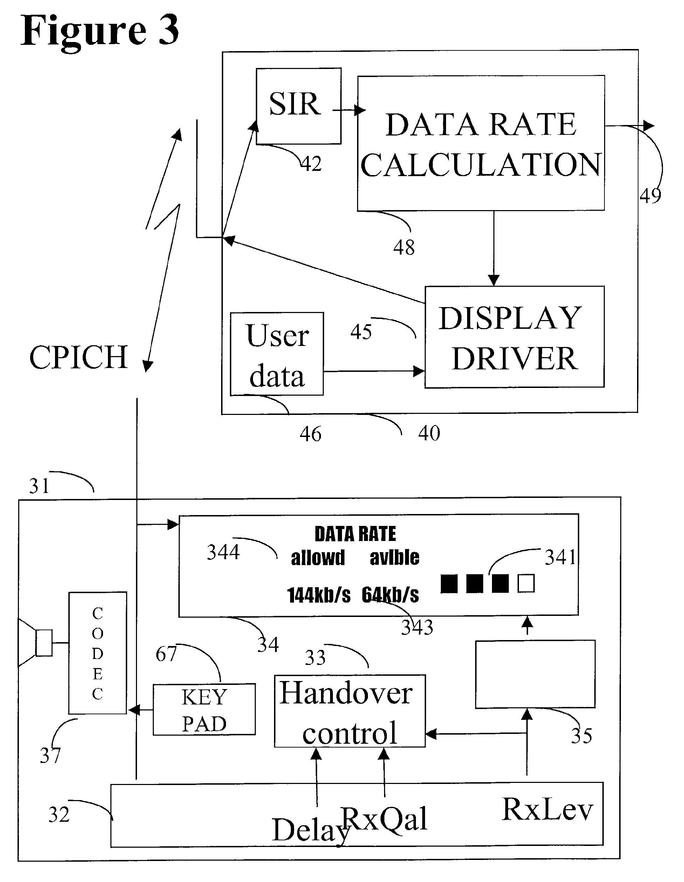

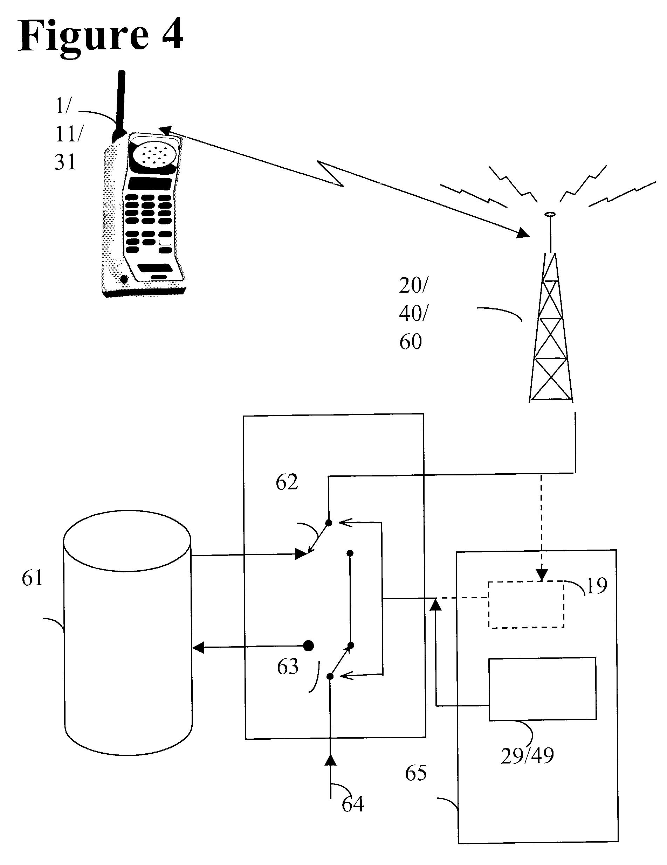

In the UMTS CDMA system, the base station (10, (Figure 4) 20 (Figures 2 and 4) 40 (figures 3 and 4) and mobile unit 1,11,31 co-operate to perform a number of measurements. In a CDMA system the capacity of a base station is inversely proportional to the interference experienced within the cell it serves, and the bearer rates are variable, depending on the capacity of the base station and the capabilities of the terminal. As well as the simple RxLev and RxQual (level and quality of received signal) used in the earlier GSM standard, these measurements include Signal to Interference Ratio (SIR), which is measured periodically on the Common Pilot Channel (CPICH). The pilot channel is broadcast continually, and provides a measure of the potential capacity of the cell at any point in time. When the terminal requests a data rate, the network either responds by accepting that rate or offers a lower speed alternative, which would be more robust as it will include more error checking. As will be discussed, the mobile unit may accept this alternative, abandon the session, or cause the data to be diverted to a buffer for subsequent downloading when a higher rate is available.

In the embodiment of Figure 1, the mobile unit 1 has a measurement system 2 that takes various physical layer measurements, including transmitted power, received power, delay time etc. These are used for various functions, primarily handover control (3). For the information of the user some of these properties are presented on a visual display 4. To achieve this, a processor 5 converts these measurements into a form in which it can drive the display 4. For example the received signal strength RxLev is used to drive a signal strength display 41. Similarly, according to the invention, the SIR is used to drive a data rate display 43. In its simplest form this will be a numerical value proportional to the reciprocal of the SIR measurement as shown, or a graphical representation thereof.

The programming to control the processor 5 may be a JAVA program downloaded to the mobile part either from the network or from a program carried on the SIM 6 or on another peripheral unit, such as a disc drive on a computer into which the mobile unit is integrated.

The measurement unit 2 extracts the SIR measurement from the pilot channel periodically or in response to specific events, for example changes in the ratio of CPICH power and the interference power, or on requests for specific data rates.

Customers may specify in advance the specific values of SIR which cause the terminal to be switched to a more robust, but slower, coding scheme, or to invoke the buffering process of the invention, and these may vary from one customer to another, according to the nature of the data the customer intends to use. Thus, the actual data rate available for a given SIR may vary between customers. This factor can be taken account of by the measurement unit 2, which can monitor the actual coding scheme used, or by the display driver 5 taking the relevant information from the SIM 6.

The network operator may wish to limit the data rates that users can request, as this has a major impact on the number of subscribers supported, and there may also be operator mechanisms to limit data rates to certain subscribers - for example a 64kb/s maximum rate may available for a cheaper subscription than is required for a 144kb/s rate. This information may be stored on the user's "subscriber identification module", (SIM) the plug-in component which identifies the individual account to which use of the mobile handset is to be charged and what incoming calls are to be routed to that handset. The display driver 5 may be programmed to obtain this figure from the SIM 6 and display this maximum permitted rate (display 43) even when a higher rate would be possible. Alternatively, both the maximum available and the maximum permitted may be displayed 43, 44, as shown in Figure 1, so that the subscriber can see whether upgrading to the more expensive subscription would be of benefit to him.

In the General packet radio System (GPRS) both the coding scheme used (selected by the network) and the number of timeslots available to each user are relevant to the available data rate. If the mobile unit 1 is working on the GPRS system the measurement system 2 monitors the coding system in use, and the number of timeslots it is using, to generate a measure of the data rate for processing by the display driver 5.

Voice calls are transmitted using a codec 7 at a fixed rate (typically 8kb/s). However the terminal may have the capability to support simultaneous voice and data calls, using multiple bearers. Thus it would be possible to maintain a voice call while also supporting a data call for which the data rate varies according to the available capacity of the serving cells.

In the embodiment of Figure 1 the display driver 5 of the mobile unit performs the processing required for conversion of the raw data used to detect enhanced data rates into a readable form. As previously mentioned, the processing may be carried out by a computer integrated with the mobile unit, for example in a "personal digital assistant", or in communication with the mobile unit for example through a data port 7a. In this embodiment the base station 10 (Figure 4) plays no part in the measurement process.

It is also possible to perform the processing elsewhere, the mobile unit passing the measured data over the interface being monitored to a remote calculation unit and receiving in return the data necessary to drive the display. This arrangement is illustrated in the embodiment of Figure 2, which operates in a similar manner to that of Figure 1, except that certain functions are now carried out by the fixed part of the network 20. Features performing the same functions as in the first embodiment have the same reference numerals, preceded by a "1" if part of the mobile unit 11 and "2" if part of the network 20. In the embodiment of Figure 2, the mobile unit 11 has a measurement system 12 that takes various physical layer measurements, including transmitted power, received power, delay time etc. These are used for various functions, primarily handover control 13. For the information of the user some of these properties are presented on a visual display 14. To achieve this, a processor 15 converts these measurements into a form in which it can drive the display 14. For example the received signal strength RxLev is used to drive a signal strength display 141.

In contrast to the arrangement of Figure 1, the SIR is monitored by a data capture unit 18 which transmits the data over the radio interface to the fixed network 20, where a processor 28 calculates the available data rate. This data may be made available to the network operator by an output 29. It is also supplied to a display driver 25, similar to the display driver 15 in the mobile handset, which generates commands for transmission over the radio interface to the display 14 of the mobile unit 11, where the commands are used to drive a data rate display 144.As in the embodiment of Figure 1, in its simplest form this will be a numerical value proportional to the reciprocal of the SIR measurement, or a graphical representation thereof.

The measurement unit 12 operates in a similar manner to the measurement unit 2 (Figure 1). However, the actual data rate available to a given customer for a given SIR can be taken account of either by the measurement unit 12, which can monitor the actual coding scheme used, (as in the embodiment of Figure 1) or by the display driver 25 taking the relevant information from the customer information database (the "Home Location Register") 26.

The information on available data rates may be stored in the user data 26 for retrieval by the display driver 25, to allow display of the maximum rate available (display 143) and the maximum permitted (144).

The calculation processor 28 can be embodied in any element on the network side 20 of the radio interface CPICH, for example in the base station itself, in the mobile switching centre (or packet data system router), or by some third party such as the user with which the mobile user is in communication. As with the mobile embodiment of Figure 1, the programming may use JAVA or any other suitable programming system.

In a third embodiment the measurement of available data rate is made by the base station. This arrangement is illustrated in Figure 3. Features performing the same functions as in the other embodiments have the same reference numerals, preceded by a "3" if part of the mobile unit 31 and "4" if part of the network 40.

In this embodiment, measurements made by the fixed part 40 of the system generate the initial data. As with the mobile units 1,11 in the previous embodiments, the measurement unit 42 takes various physical layer measurements, including transmitted power, received power, delay time etc. These are used for various functions, including handover control, in co-operation with the mobile unit 31. To present a visual display 34 for the user, a processor 45 converts these measurements into a form in which it can drive the display 34.

The SIR is monitored by the measurement unit and then passed to a processor 48 to calculate the available data rate. As with the embodiment of Figure 2, this processor 48 may be located anywhere on the network side of the radio interface, not necessarily with the network operator itself. The output data from the processor 48 may be made available to the network operator or other user by an output 49. As with the embodiment of Figure 2, it is also supplied to a display driver 45, which generates commands for transmission over the radio interface to the display 34 of the mobile unit 31, where the commands are used to drive a data rate display 344 similar to the displays 43,143 already discussed..

The measurement unit 42 operates in a similar manner to the corresponding measurement unit 12 in Figure 2. The display driver 45 may take the relevant information from the customer information database (the "Home Location Register") 46 in the same way as the corresponding elements 25, 26 co-operate in Figure 2, and the maximum available and the maximum permitted may be displayed 343, 344, as shown in Figure 3, in a similar manner to that already described with respect to Figure 2.

In the General packet radio System (GPRS) both the coding scheme used (selected by the network) and the number of timeslots available to each user are relevant to the available data rate. If the mobile unit 1, 11,31 and base station 20, 40 are working on the GPRS system the measurement system 2, 12, 42 monitors the coding system in use, and the number of timeslots it is using, to generate a measure of the data rate for processing by the display driver 5, 25, 45.

All three versions of the mobile terminal 1, 11, 31 have the other components normally associated with such devices, for example a keypad 67 for the user to input commands for controlling the operation of the terminal.

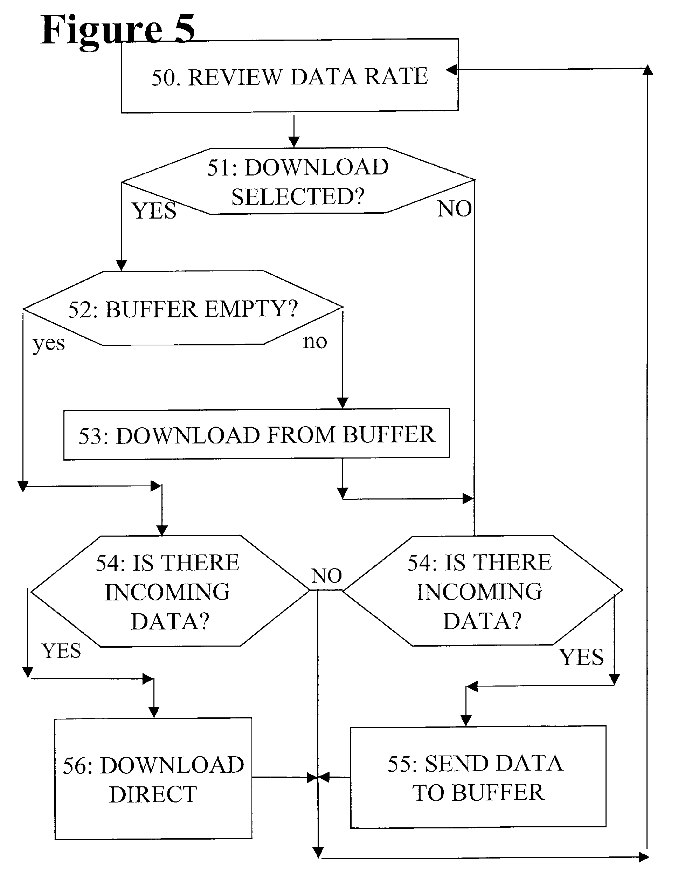

Two embodiments which use data rate indications derived in this way to control the downloading of information will now both be described, with reference to Figures 4 and 5. Figure 4 shows the network elements which co-operate in the invention, whilst Figure 5 is a flow diagram illustrating the processes taking place. The difference between the embodiments lies in which elements depicted in Figure 4 perform the processes depicted in Figure 5. In the first embodiment the process is under the control of the user, and the currently available data rate may be determined using the arrangement of any of Figures 1, 2 and 3. The second embodiment is controlled automatically, and therefore requires the available data rate to be known to the relevant network elements 29, 49. This is necessarily the case for the arrangements of Figures 2 and 3, but the arrangement of Figure 1 can be modified to supply the same information.

Figure 4 shows a mobile handset 1,11,31 of the kind already described with reference to Figures 1 2 and 3 respectively, in radio communication with a network through a base station 10, 20, 40. The network includes a buffer store 61 connectable to an input 64 by a switch 63 and to an output leading to the base station 20, 40, 60 by a switch 62, arranged such that data can be transmitted directly from the input 64 to the base station 60 or by way of the buffer 61. In the first embodiment the switches 62, 63 are operated by a control unit 19 activated by the user's keypad 67 (Figure 1, 2 or 3). In the second embodiment the switches are controlled by control units 29/49 activated by the network-based data rate calculation unit 28, 48 (Figure 2 or 3), or by a control unit 19 activated by a signal generated automatically by the handset 1 (Figure 1).

In detail, the process operates as follows. The process is initiated periodically, or in response to specific events affecting the capacity available, such as a handover, or affecting the capacity required, such as the start of a download. Firstly, the currently available data rate is checked (step 50). This check may be performed by the user reading the display 4, 14, 34 on his handset, or by the network-based control unit 29/49. A selection is then made by the user or the control unit 29/49 as to whether the data rate is acceptable (Step 51)

If the data rate is not considered acceptable, the network-based control unit (29/49) or the user (using the keypad 67 to transmit a command to the control unit 19) instructs the switch 62, 63 not to download data to the terminal, either from the buffer 61 or direct from the input 64 If the data rate is considered acceptable, the switch 62, 63 is instructed to allow data to be downloaded to the mobile unit (step 51).

If download has been selected, the control unit 19/29/49 next checks whether there is data already in the buffer 61 (step 52). If this is the case, this data is downloaded first (step 53).

A further check is then made (step 54) to determine if data is incoming over the input 64. If download has not been selected (step 51), any such data is routed to the buffer 61 for subsequent download to the user terminal (step 55). If download to the terminal has been selected incoming data is nevertheless routed to the buffer 61 if there is data already present in the buffer 61. This ensures that the data already in the buffer 61 is tranmitted first (step 53), so that the data arrives at the terminal 1/11/31 in the correct order.

If the control unit 19/29/49 finds the buffer 61 is empty (step 52) and data is arriving on the input 64 (step 54), the switch 62, 63 is set to allow direct download of data from the input 64 to the terminal 1/11/31 (step 56).

If no data remains to be received over the input 64, no action is required until the next review

The control unit 19/29/49 determines whether there is any data currently incoming over the input 64 (step 54). If there is, it is downloaded to the buffer 61 (step 53).

In the first embodiment the operation of the invention is controlled by the user. Assume at the outset that data from the input 64 is being transmitted directly to the user terminal 1/11/31 by way of the base station 10/20/40 - that is to say, the buffer 61 is not in use. If the user then sees from the display 43, 143, 343 that network capability is reduced, or is so notified by the network, he is given the option to pause the file transfer process. (The user may also wish to pause in order to carry out another packet-switched or circuit-switched activity, or because he wishes to minimise on-line time). Pausing is done by pressing a key on the keypad 67 which causes the control unit 19 to operate the switch 63 such that data arriving over the input 64 is diverted to the buffer 61. When downloading is to be resumed, the user operates the keypad 67 to send a command to the control unit 19 to operate the switch 62 to allow the data in the buffer 61 to be downloaded to the mobile unit 1/11/31.

If further data arrives over the input 64 whilst the buffer 61 is downloading to the user terminal 1/11/31 this further data is delivered to the buffer 61, so that the data already in the buffer 61 is delivered first. If the buffer is empty, data from the input 64 may be directed to the user terminal 1/11/31, without being buffered.

In the second embodiment, the apparatus controls the process automatically. This may be done either in the handset 1, controlled by the measurement system 2 and/or handover control 3 (Figure 1) or in a network element 29/49. The system (handset/device and network) already has some knowledge of the cell capability. A predetermined algorithm may be used to initiate the pause feature automatically.

When the pause feature is initiated, the application/ device responsible for downloading the file informs the network storage space server (buffer 61) of the details of the download. Such information includes the source address, total file size, percentage download completed, mobile device identification. The network server can then continue the file download from the point at which the download was suspended.

## Claims

1. A method of controlling the delivery of data from a network to a communications terminal over a communications connection such that data delivery may be suspended, the data being stored for later transmission.

2. A method according to claim 1, wherein the connection has variable data transport capabilities, comprising the steps of monitoring a property of the connection indicative of its data transport capabilities, and controlling the delivery of data to the communications terminal according to the monitored property.

3. A method according to claim 2 wherein the property monitored is the data transport rate available for transmission of the data.

4. A method according to claim 1, claim 2 or claim 3, wherein the delivery process is controlled by a signal transmitted from the terminal to the network

5. A method according to claim 4 wherein the delivery process is controlled by a signal generated by a human user.

6. A method according to claim 2, 3 or 4 wherein the delivery process is controlled by a means responsive to a measured value of the data transport capability.

7. A telecommunication system comprising means for the delivery of data from the network to a communications terminal over a communications connection, means for suspending such data delivery, and means for storing data during such suspension for later transmission.

8. A telecommunications system according to claim 7, comprising means for monitoring a property of the connection indicative of its data transport capabilities, and means for controlling the delivery of data to the communications terminal according to the said property.

9. A telecommunications system according to claim 8, wherein the property monitored is the data transport rate available for transmission of the data.

10. A telecommunications system according to claim 7, comprising means for receiving a signal transmitted from the terminal to the network, and means for controlling the delivery of data to the communications terminal in reponse to the said signal.
